# EUROPEAN PATENT APPLICATION

(11) **EP 4 474 779 A1**
(43) Date of publication of application: **11.12.2024**
(21) Application number: 24180950.8
(22) Date of filing: 07.06.2024
(51) Int. Cl.: G01G 19/414, G01G 19/42, G06Q 10/08, G06Q 20/20, G07G 1/00

(54) **METHODS AND DEVICES FOR SELLING A PRODUCT THAT IS SOLD BY WEIGHT IN PICK & GO SHOPPING**

(30) Priority: 09.06.2023 CH 6142023
(71) Applicant: Mettler-Toledo (Albstadt) GmbH, 72458 Albstadt (DE)
(72) Inventor: Kempf, Edgar, 72514 Inzigkofen (DE); Huber, Denis, 72459 Albstadt (DE); Hecht, Alexander, 72458 Albstadt (DE); Quarleiter, Janik, 72510 Stetten a.k.M. (DE); Engeln, Werner, 72135 Dettenhausen (DE); Plantade, René, 61231 Bad Nauheim (DE)
(74) Representative: Mettler-Toledo

(57) **Abstract**

The invention relates to methods, devices, systems, and computer programs in the field of frictionless commerce, in particular Pick&Go shopping, for selling a product (item, good, etc.) that needs to be weighed for determining a selling price. In particular, a method 100 for determining a weight of a product 3 that is sold by weight is provided, wherein a quantity of the product 3 is laid out openly and loads a weighing device 10. The method comprises a step of determining a difference weighing value by determining a difference between a starting weighing value and an ending weighing value, wherein the difference weighing value represents a decrease in the quantity of the product. Further, a method 200 for selling a product 3 that is sold by weight and a method for determining a price of a product 3 that is sold by weight are provided, these methods comprising a method 100 for determining a weight of a product 3 that is sold by weight and a step S11 of determining a price on the basis of the difference weighing value.

## Description

### Technical Field

The invention relates to methods, devices, systems, and computer programs in the field of frictionless commerce, in particular Pick&Go shopping, for selling a product (item, good, etc.) that needs to be weighed for determining a selling price. Examples of such a product are unpackaged products, produce, bulk goods, bulk items, fruits, vegetables etc. The product may be displayed to a customer in boxes or containers, as it is often the case in groceries, fruit- and vegetable sections of shops, or on shelves.

### Background Art

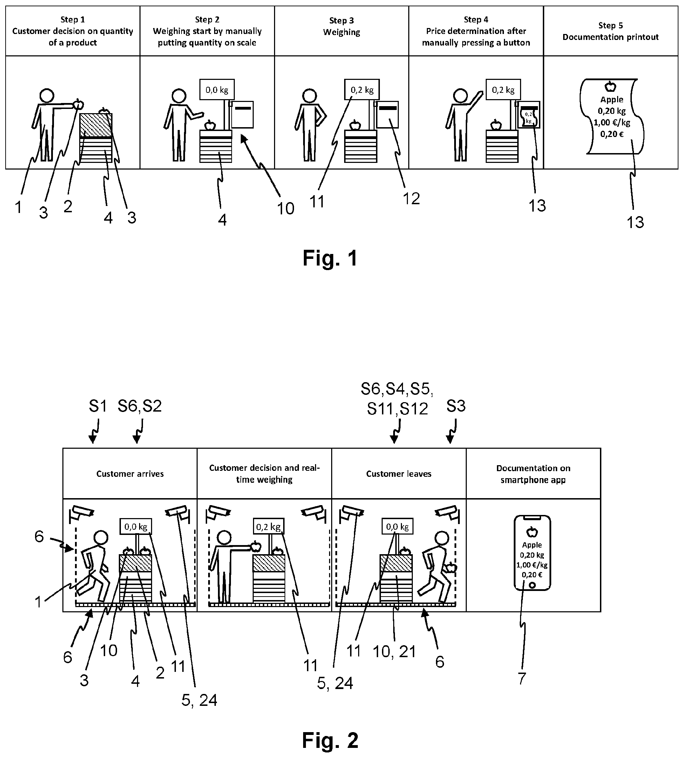

In non-Pick&Go state-of-the-art shopping processes of products that need to be weighed for determining a selling price, a customer (buyer, user) decides in a first step on the quantity (amount, number, etc.) of a product she/he wants to buy. In a subsequent second step, the customer places this quantity on a weighing device. Placing the quantity on a weighing device starts the weighing process (step 3). Subsequently, the selling price is determined (step 4) based on the measured weight of the quantity placed on the weighing device. Selling price determination (i.e., step 4) is usually initiated by a user interaction, such as pressing a button that directly or indirectly (e.g. via identification of the product) indicates the customer's intention to buy the quantity placed on the weighing device. The weighing and pricing process of the quantity ends with the generation of a printout (step 5). **Figure** 1 shows a schematic representation of a non-Pick&Go state-of-the-art weighing and pricing process of products (apples, in the exemplary embodiment shown in figure 1) that need to be weighed for determining a selling price.

In contrast to state-of-the-art weighing and pricing processes of products that need to be weighed for determining a selling price in non-Pick&Go shopping, weighing and pricing processes in Pick&Go shopping cannot rely on well-separated steps that are carried out in a well-defined sequence. This is a direct consequence of the basic idea behind Pick&Go shopping and its ultimate aim of frictionless commerce. In particular, a customer shall be able to create a shopping experience according to his/her preferences, wherein this experience includes the opportunity to select the products and quantities she/he wants in a manner that fits best for a specific customer - but probably not for another customer - and to leave the store after as little interaction ("friction") as possible.

A first consequence of this basic idea and ultimate aim of Pick&Go shopping on the weighing and pricing process of products that need to be weighed for determining a selling price is that there are no user interactions that are specific for and have no other purpose than indicating the starting point and/or ending point of the steps of the weighing and pricing process. In particular, there is no specific user interaction indicating that the customer has taken the quantity of a product she/he wants to buy. In other words, there is no specific user interaction for weighing the quantity of the product the customer intends to buy and for determining the corresponding selling price.

A second consequence of this basic idea and ultimate aim of Pick&Go shopping on the weighing and pricing process of products that need to be weighed for determining a selling price is that various additional customer behaviors need to be considered in Pick&Go shopping processes of products that need to be weighed for determining a selling price for making sure that a customer is charged correctly, this means that a customer pays only for what she/he finally took away. In particular, a customer may take a quantity of a product and place a part of it back again (e.g., a customer may take a bundle of bananas, separate a few bananas from the bundle and put back the remaining bundle, or a customer may take out and put back items for quality assessment), or two customers that do not shop together may take out quantities of a product from a same basket for this product.

A third consequence of the basic idea and ultimate aim of Pick&Go shopping on the weighing and pricing process of products that need to be weighed for determining a selling price is that no solutions were available so far, at least no solutions that are economically interesting for a retailer, that are in agreement with regulatory requirements, such as directive 2014/31/EU (or preceding 2009/23/EG or 90/384/EWG) and corresponding EN 45501 and WELMEC guides, OIML R 76-1 etc. In other words, solutions that are economically interesting for a retailer, for example in terms of their applicability for different products, investment costs, maintenance costs, reliability, integrability in established shop concepts, conformity with customer expectations, customer experience, frictionless shopping etc., and that are approved for use in a retail environment, the latter being a legal condition for use of such a solution in a retail environment, were not available so far. Even in other words, Pick&Go selling of products that need to be weighed were not economically interesting and approved / legal-for-trade, so far.

As mentioned, the applicability for different products in combination with Pick&Go / frictionless shopping in which a customer does not interact with a weighing device in a direct manner is an issue. Examples of products for which a solution needs to be applicable for becoming economically interesting are all kinds of fruits and vegetables, but also "smaller" products that are sold by weight, such as candies, nuts, etc., and even products like species, tea, flour, sugar etc., and liquid products. Solutions that use dispensers, for example, are not able to provide the needed range of applicability. Further, such solutions are not really Pick&Go / frictionless because the user needs to indicate to a weighing device when it is loaded with the quantity of the product she/he intends to buy, at least.

The absence of well-separated steps that are carried out in a well-defined sequence, the individualized customer behavior, and the regulatory requirements are main reasons why there is no, at least no economically interesting, solution available for selling products by weight in Pick&Go shopping. In other words, products that are sold by piece (but not by weight) are offered in state-of-the-art Pick&Go shops, only or mainly.

The main approach for enabling Pick&Go shopping in general, but without offering products that need to be weighed for determining a selling price, proposes close and individual monitoring and mapping of each customer and its behavior at any time during the customer's stay in the store. US2019/0138986 A1, EP3940614A1, US2015/0039458A1, and WO2020/018585A1 are example of documents in line with this main approach. In embodiments according to this main approach, a "smart shelf" is used, wherein the smart shelf comprises a scale or scales for determining whether an item was taken by a customer, how many items were taken by a customer, or which item was taken by a customer, for example WO2021/137190A1, US10332066B1, US10121121B1, and US2021/0150502A1.

Approaches that use (often in combination with a smart shelf) close and individual monitoring and mapping of each customer and its behavior at any time have various drawbacks. For example, the equipment costs are high, the needed installations and adjustments in existing stores are relevant, and the needed computing power is high, making these approaches less favorable for use in stores. Further, using close and individual monitoring and mapping of each customer and its behavior at any time during the customer's stay in the store makes real-time customer information impossible, at least impossible with reasonable effort and without departing from the basic idea and ultimate aim of Pick&Go shopping. However, such real-time customer information is needed for integrating a scale needed for determining the selling price of products that have a selling price that depends on their weight. Otherwise, the customer does neither know the quantity of the product she/he has taken so far nor the price of this quantity, or the customer has to wait for this information which makes an annoying shopping experience. Further, as mentioned above, legal requirements for selling products by weight cannot be met. For example, it would not be possible, at least not with reasonable effort and without departing from the general idea and ultimate aim of Pick&Go shopping, to make sure that the customer gets a correct price information during her/his purchasing of a specific product or that a price information provided to the customer during her/his purchasing of a specific product is correct and linked to her/his actions in a manner that is clear for the customer.

Approaches to generalize the above-mentioned main approach for enabling Pick&Go shopping to products that need to be weighed for determining a selling price will not only implement the drawbacks of this main approach but make the situation even worse. In particular, the use of any scale used in embodiments according to said main approach, in particular any scale used in "smart shelves", causes various issues that prevents its use for determining a selling price of a product that needs to be weighed based on a weighing value generated by this scale. In particular:
- The scale is not accurate enough for using a weighing value generated by the scale for determining a selling price.
- The scale is not legal-for-trade. This means the scale is not configured and approved for being used in price calculations.
- The weighing process carried out by the scale is not integrated in the purchase process in a manner that the purchase process is legal-for-trade.
- The scale detects a decreasing weighing value for the quantity a customer wants to buy.
- The scale is loaded at the beginning of any weighing process by a quantity of a product, wherein the customer does not intend to buy this quantity. Further, the specific quantity the customer intends to buy is never on the/a scale.

Approaches that dispense with close and individual monitoring and mapping of each customer and its behavior at any time during the customer's stay in the store, such as active user identification at any place a customer intends to buy a product or a quantity of a product or usage of dispensers, are not able to fulfil the needs of the retailers, too. As mentioned, dispensers are not able to provide the needed range of applicability, are not really suitable for Pick&Go / frictionless shopping, and are further expensive in maintenance, at least. Approaches that comprise active user identification at any place a customer intends to buy a product or a quantity of a product are against the ultimate aim of Pick&Go shopping (i.e., frictionless commerce) and they were used for selling products by piece, this means the case of selling products that need to be weighed for determining a selling price is not covered. US2013/0284806A1 is an example of a document in line with this approach. US2021/0383341A1 generalized to some extent this approach to products that need to be weighed for determining a selling price, however in the field of vending machine technology, this means in a field, in which the customer behavior is well defined.

### Summary of invention

It is an object of the invention to provide a weighing method, a weighing device and a system that enable, or at least contribute to, the selling of products that are sold by weight in frictionless commerce, in particular in Pick&Go shopping, by overcoming at least some of the above-mentioned drawbacks of corresponding state-of-the-art weighing methods, weighing devices and systems.

It is a further object of the invention to provide a method, a device and a system for determining a price of and/or for selling products that are sold by weight in frictionless commerce, in particular in Pick&Go shopping, and that overcome at least some of the above-mentioned drawbacks of corresponding state-of-the-art methods, devices and systems.

In particular, the provided methods, devices and systems are legal-for-trade. In particular, the methods, devices and systems are legal-for-trade by being in agreement with directive 2014/31/EU and/or by being approved/certified by a competent (national or regional) authority or conformity assessment body.

Alternatively or in addition, the provided methods, devices and systems are configured for identifying a specific (separate) weighing process, in particular its start and end, wherein this identification does not need any user, in particular customer, interaction that is specific for and has no other purpose than indicating the starting or ending of the weighing process. In other words, this identification does not prompt the user to any action that is not a natural part of the user's shopping behavior. In particular, the provided methods, devices and systems may be configured for real-time and frictionless determination of the end of a weighing process.

It is yet a further object of the invention to provide a related computer program, computer-readable signal, and a computer-readable medium.

At least one of these objects is enabled by the claimed methods, systems, and computer programs. Further effects and advantages of the disclosed subject matter, whether explicitly mentioned or not, will become apparent in view of the disclosure provided below.

The following terms have the following meaning if not stated otherwise:

The term "frictionless commerce" includes any commerce (shopping concept, shopping experience, retail concept etc.) in which the active interaction of a customer with equipment of the store is reduced. In other words, "frictionless commerce" has the meaning of "friction-reduced commerce", wherein the friction, this means the active interaction of the customer with equipment of the store may be reduced to zero ("frictionless"). However, the term "friction-reduced commerce" is not an established term in the field of the invention, in contrast to the term "frictionless commerce".

The fact that the invention relates to frictionless commerce / Pick&Go shopping implies that the provided methods are automated and computer implemented. In particular, the steps of the provided methods that do not concern displaying (laying out), selecting, taking away a product or a quantity of a product, and moving of the customer through the shop are automated. Further, there is no need that a salesperson is involved in the provided methods.

According to a first aspect of the invention, a method, in particular a computer-implemented method, for determining a weight of a product that is sold by weight is provided, wherein a quantity of the product is laid out openly and loads a weighing device, in particular a legal-for-trade (also called "approved") weighing device. In other words, the method may comprise a step of laying out openly a quantity of the product that is sold by weight, wherein the quantity of the product loads a weighing device.

Usually, the weighing device comprises an indication (display, screen etc.), in particular an indication for displaying a weighing value determined by the weighing device, and optionally further information, such as a selling price calculated from the weighing value and/or the base price of the product or products that load(s) the weighing device. A selling price and/or a base price may be displayed in particular in configurations, in which the weighing device is loaded by one product only, by products of the same base price only, or if means for automated detection of the product taken by the user are installed. The weighing device may then be approved accordingly.

The weighing device may be loaded further by items that are different from the quantity of the product, such as a box comprising the quantity, a device for displaying product information, an indication, for example a display or screen, of or connected to the weighing device, equipment for taking from the quantity, etc. Because the weight of such further items does not change at the end of a weighing event with respect to the start of the weighing event, such further items are not mentioned explicitly in the following although it is clear for a person skilled in the art that the weighing device is loaded by these further items, too.

"Laying out openly" means that the quantity of the product is freely accessible for any user, in particular customer. In particular, no user action is needed to access the quantity and to take from this quantity a quantity the user intends to buy, optionally except a user action needed for removing or opening means that are present for hygienic or energetic (in particular cooling) reasons, such as removing a cover or opening a door that may be a sliding door. However, there is no user action related to user identification, unlocking a sophisticated locking mechanism, in particular a locking mechanism that restricts the group of people who have access to the quantity of the product, activation of a locking slider or shutter, etc. For example, a quantity of a product is not laid out openly if it is stored in a dispenser or in a vending machine, because a user action that goes beyond removing or opening means that are present for hygienic or energetic reasons is present in both cases.

In an embodiment, the quantity of the product is laid out in a manner that a user can access it without any action. In other words, the user can access the laid out quantity directly and without carrying out any revealing, opening, draining, unpacking, unwrapping etc. action.

The provided method for determining a weight of a product that is sold by weight comprises the following steps:
- A step of identifying a start of a weighing event concerning the quantity of the product. Consequently, the weighing event concerns the weighing device that is loaded by the quantity of the product.
   In preferred embodiments, the start of the weighing event is identified by detecting, in particular real-time detecting, a specific user behavior that is part of the natural behavior of a user during shopping, in particular frictionless shopping. In particular, it is not a behavior having the only or main intention to indicate the start of a weighing event.
   For example, the step of identifying a start of a weighing event may comprise a step of detecting a user entering an area adjacent to the laid out quantity of the product, in an embodiment. For example, a camera or cameras may be configured to detect that a user enters the area adjacent to the laid out quantity of the product. Alternatively or in addition to the camera(s), any other device, system or technology that is able to detect a user entering an area adjacent to the laid out quantity of the product may be used, such as a device, system or technology that uses a motion sensor, an occupancy sensor, a presence sensor, a pressure sensor, an optical (including IR etc.) sensor, an NFC device etc.
   For example, the step of identifying a start of a weighing event may comprise a step of detecting, by the weighing device, a change, in particular a decrease, of the load on the weighing device, in an embodiment.
   For example, the step of identifying a start of a weighing event may comprise a step of detecting the user getting or getting soon in contact with the quantity of the product laid out openly, in an embodiment. For example, a user action related to removing or opening means that are present for hygienic or energetic reasons, a user action comprising taking an equipment, such as a (hygienic) glove or a scooping tool, for taking a part of the quantity of the product that is laid out openly, a user action comprising moving its hand and/or said equipment towards the quantity of the product may be detected, for example a movement of the user's hand and/or said equipment into a region above this quantity, into the space between two shelves of a shelf, and/or through an opening through which accesses to the quantity that is laid out openly is given. Any device, system or technology that is able to contribute to such a detection may be used in the step of detecting the user getting or getting soon in contact with the quantity of the product laid out openly. For example, at least one of a camera, a motion sensor, an occupancy sensor, a presence sensor, a position sensor (for example for determining the state of the means that are present for hygienic or energetic reasons), an optical (including IR etc.) sensor, an NFC device (for example arranged on the equipment for taking) etc. may be used.
   The weighing event, the start of which is identified, may be a potential weighing event, only. For example, the user behavior may be such that there is no change in the quantity of the product that is laid out openly and hence of the load on the weighing device.
- A step of reading out a starting weighing value of the weighing device. The read out starting weighing value may be, and usually is, at least one of:
   - Zero. In particular, the read out starting weighing value is zero if an indication of the loaded weighing device is brought to zero (set to zero) when or before a start of a weighing event concerning the quantity of the product is identified, and if it is the value of this indication that is read out as starting weighing value.
   - The weighing value detected by the weighing device for the quantity of the product (and the mentioned further items) that loads the weighing device at the time a start of a weighing event concerning the quantity of the product is identified.
   The starting weighing value may be read out when a start of a weighing event is identified in the step of identifying a start of a weighing event.
   It goes without saying that the starting weighing value is or corresponds to a weighing value determined by the weighing device before the user made any manipulation that may cause a change of the weighing value determined by the weighing device. For example, if the step of identifying a start of a weighing event comprises the step of detecting, by the weighing device, a change of the load on the weighing device, the starting weighing value is or bases on a weighing value detected by the weighing device before said change of the load occurred.
- A step of identifying an end of the weighing event concerning the quantity of the product.
   In preferred embodiments, the end of the weighing event is identified by detecting, in particular real-time detecting, a specific user behavior that is part of the natural behavior of a user during shopping, in particular frictionless shopping. In particular, it is not a behavior having the only or main intention to indicate the end of a weighing event.
   For example, the step of identifying an end of the weighing event comprises a step of detecting a user leaving an area adjacent to the laid out quantity of the product, in an embodiment. For example, a camera or cameras may be configured to detect that a user leaves the area adjacent to the laid out quantity of the product. Alternatively or in addition to the camera(s), any other device, system or technology that is able to detect a user leaving an area adjacent to the laid out quantity of the product may be used, such as a device, system or technology that uses a motion sensor, an occupancy sensor, a presence sensor, a pressure sensor, an optical (including IR etc.) sensor, an NFC device etc. In embodiments in which a camera or cameras, a device, system or technology is/are used in a step of detecting a user entering an area adjacent to the laid out quantity of the product, the camera(s), device, system or technology used in the step of detecting a user leaving an area (the area, as the case may be) adjacent to the laid out quantity of the product may be, and usually is/are, the same.
   For example, the step of identifying an end of the weighing event may comprise a step of detecting that a weighing signal measured by the weighing device has not changed for a pre-set period of time. The pre-set period of time may be between 2 and 20 seconds, in particular between 5 and 15 seconds, or between 5 and 10 seconds. For example, it may be 5, 10, or 15 seconds.
   For example, the step of identifying an end of the weighing event may comprise a step of detecting that the user did not get or try to get in contact with the quantity of the product laid out openly for a pre-set period of time or that the user took an action indicating the end of taking away a part of the quantity of the product that is laid out openly and, optionally, did not undo this action for a pre-set period of time, in an embodiment. Not moving his/her hand and/or an equipment for taking a part of the quantity of the product that is laid out openly towards this quantity for a pre-set period of time is an example of the former alternative (detecting that the user did not get or try to get in contact). Examples of the latter alternative (action indicating the end of taking away) are a user action related to bring means that are present for hygienic or energetic reasons in a hygienic or energetic favorable state, such as covering the quantity again or closing said means again, and a user action comprising laying down an equipment for taking a part of the quantity of the product that is laid out openly. Any device, system or technology that is able to contribute to detections related to the step of detecting that the user did not get or try to get in contact with the quantity and/or a step of detecting a user action indicating the end of taking away may be used in these steps. For example, at least one of a camera, a motion sensor, an occupancy sensor, a presence sensor, a position sensor (for example for determining the state of the means that are present for hygienic or energetic reasons), an optical (including IR etc.) sensor, an NFC device (for example arranged on the equipment for taking) etc. may be used. The pre-set period of time, if any, may be a few seconds, for example between 3 and 30 seconds, such as between 5 and 15, or 5 and 10 seconds.
   The end of the weighing event that is identified may be the end of a potential weighing event, only. For example, there may be no change in the quantity of the product that loads the weighing device, no step of reading out an ending weighing value, no step of determining a difference weighing value, no step of determining a price on the basis of the difference weighing value, and/or no step of providing a price and/or other information.
   The step of identifying an end of the weighing event may be a separate step of the method, in particular a step that is separate from the step of identifying a start of a weighing event, in embodiments.
- A step of reading out an ending weighing value of the weighing device.
   In an embodiment, the ending weighing value is read out in the step of reading out an ending weighing value after a weighing signal measured by the weighing device has not changed for a pre-set period of time. The pre-set period of time may be, for example, between 2 and 20 seconds, in particular between 5 and 15 seconds, or between 5 and 10 seconds. For example, it may be 5, 10, or 15 seconds. At least in such embodiments, there may be no explicit identification of the end of the weighing event, this means no explicit step of identifying an end of the weighing event, and/or the end of the weighing event may be considered as coinciding with the step of reading out an ending weighing value.
   In an exemplary embodiment of the embodiment in which the ending weighing value is read out in the step of reading out an ending weighing value after a weighing signal measured by the weighing device has not changed for a pre-set period of time, the onset of this pre-set period of time may be triggered by the identification of the end of the weighing event in the step of identifying an end of the weighing event concerning the quantity of the product. The step of identifying an end of the weighing event may be according to any embodiment disclosed, in particular disclosed above.
   Alternatively, the ending weighing value may be read out when the end of the weighing event is identified in the step of identifying an end of the weighing event concerning the quantity of the product. The step of identifying an end of the weighing event may be according to any embodiment disclosed, in particular disclosed above. The step of reading out an ending weighing value may comprise or not comprise waiting for the pre-set period of time in which a weighing signal measured by the weighing device does not change.
   In embodiments, in which the step of identifying an end of the weighing event comprises a step of detecting that a weighing signal measured by the weighing device has not changed for a pre-set period of time, this pre-set period of time and the pre-set period of time for which the weighing signal measured by the weighing device must not change before reading out the ending weighing value may be the same. In particular in this case, there may be no explicit step of identifying an end of the weighing event.
   In other words, the ending weighing value of the weighing device may be read out, in particular read out for determining a difference weighing value as disclosed with respect to the step of determining a difference weighing value further below, at the time or after an end of the weighing event is identified in the step of identifying an end of the weighing event concerning the quantity of the product.
   The read out ending weighing value may be, and usually is, at least one of:
      - The weighing value detected by the weighing device for the quantity of the product (and the mentioned further items) that loads the weighing device at the time the ending weighing value is read out in the step of reading out an ending weighing value of the weighing device.
         In particular, this is the case if the read out starting weighing value is the weighing value detected by the weighing device for the quantity of the product (and the mentioned further items) that loads the weighing device at the time a start of a weighing event concerning the quantity of the product is identified.
      - A value of an indication of the weighing device at the time the ending weighing value is read out in the step of reading out an ending weighing value of the weighing device.
         In particular, this is the case if the read out starting weighing value is the value of a/the indication of the loaded weighing device at the time a start of a weighing event concerning the quantity of the product is identified, in particular zero due to bringing (setting) the indication to zero when or before a start of a weighing event concerning the quantity of the product is identified.
   It goes without saying that the ending weighing value read out in the step of reading out an ending weighing value of the weighing device is the ending weighing value of the same weighing event for which a starting weighing value was read out in the step of reading out a starting weighing value of the weighing device.
- A step of determining a difference weighing value by determining a difference between the starting weighing value and the ending weighing value, wherein the difference weighing value represents a decrease in the quantity of the product.
   In other words, the steps of identifying a start of a weighing event concerning the quantity of the product and of reading out a starting weighing value of the weighing device on one side, and the steps of identifying an end of the weighing event concerning the quantity of the product and of reading out an ending weighing value of the weighing device on the other side are coordinated with the user's taking from the quantity of the product that is laid out openly the quantity she/he wants to buy in such a way that the weight of the quantity taken by the user can be determined from the read out starting weighing value and the read out ending weighing value. This coordination, however, does not rely on any active user interaction that goes beyond approaching the place (box, shelf etc.) where the quantity of the product is laid out openly, taking the quantity from the laid out quantity the user wants to buy and moving away from said place, for example moving away to a next product the user wants to buy or to a Point of Sales (POS) / Check-out system that may be a frictionless POS- or Check-out system. In particular, the coordination does not rely on any active and specific user interaction for weighing the quantity of the product she/he wants to buy, for indicating the start and/or end of the weighing event for the quantity of the product she/he wants to buy, for user identification, for getting access to the quantity of the product she/he wants to buy (except user interactions needed for hygienic and/or energetic reasons) etc. In other words, the coordination is established (runs) in a fully automated manner without conscious perception by the user.
   The difference weighing value that is determined in the step of determining a difference weighing value may base on:
      - The starting weighing value being the weighing value detected by the weighing device for the quantity of the product (and the mentioned further items) that loads the weighing device at the time a start of a weighing event concerning the quantity of the product is identified, and the ending weighing value being the weighing value detected by the weighing device for the quantity of the product (and the mentioned further items) that loads the weighing device at the time the ending weighing value is read out in the step of reading out an ending weighing value of the weighing device.
      - The starting weighing value being the value of an indication of the loaded weighing device at the time a start of a weighing event concerning the quantity of the product is identified, and the ending weighing value being the value of the indication at the time the ending weighing value is read out in the step of reading out an ending weighing value of the weighing device. As mentioned and discussed further below, it may be made sure that the value of the indication is zero at or immediately after a start of a weighing event is identified, wherein the used starting weighing value is zero.

In an embodiment, as mentioned, the method may comprise a step of bringing an indication of the loaded weighing device to zero, this means of setting an indication of the loaded weighing device to zero. In addition or alternatively to the exemplary embodiments of this step disclosed above, at least one of the following may apply:
- The step of bringing an indication of the loaded weighing device to zero is carried out when an end of the weighing event is identified in the step of identifying an end of the weighing event, after reading out an ending weighing value, in particular immediately after reading out an ending weighing value, in the step of reading out an ending weighing value, a pre-set period of time after identifying an end of the weighing event in the step of identifying an end of the weighing event, or a pre-set period of time after reading out an ending weighing value in the step of reading out an ending weighing value.
   The pre-set period of time, if any, may be such that a user still sees on the indication the weight of the quantity she/he took away from the quantity of the good that is laid out openly when she/he looks back during moving away from the place the quantity of the product is laid out openly, and such that a next user does not need to wait a long time for the indication showing zero or the weight of the quantity the next user is taking from the quantity that is laid out openly. For example, the pre-set period of time may be between 1 and 10 seconds, in particular between 2 and 5 seconds. For example, the pre-set period of time may be 1, 2, 3, 4, or 5 seconds.
   In embodiments comprising a step of bringing an indication of the loaded weighing device to zero when or after identifying the end of the weighing event in the step of identifying an end of the weighing event, the ending weighing value may be read out before the indication is brought to zero, in particular if the value of the indication is used as ending weighing value.
- The step of bringing an indication of the loaded weighing device to zero is carried out when a start of a weighing event is identified in the step of identifying a start of a weighing event. Alternatively, the step of bringing an indication of the loaded weighing device to zero may be carried out a pre-set period of time after identifying a start of a weighing event in the step of identifying a start of a weighing event. This alternative, however, is usually less favorable, because the step of identifying a start of a weighing event is configured such that a prompt start of a weighing event is very likely and because it is favorable to give an immediate feedback to the user that everything is ready for taking from the quantity of the product that is laid out openly the amount the user wants to buy after the user behavior indicated by his/her behavior that she/he wants to take away something from this quantity.
As mentioned, the starting weighing value may be, and usually is, read out when a start of a weighing event is identified in the step of identifying a start of a weighing event. In embodiments comprising a step of bringing an indication of the loaded weighing device to zero when or after a start of a weighing event is identified in the step of identifying a start of a weighing event, an additional condition for reading out the starting weighing value may be that the indication was brought to zero, in particular if the value of the indication is used as starting weighing value.

As can be seen from the foregoing, various different events may cause identification of a start of a weighing event, reading out of a starting weighing value, identification of an end of the weighing event, reading out of an ending weighing value, and - if present - bringing an indication of the loaded weighing device to zero. Which events are used for triggering the related steps are product and/or store specific. However, the related steps are coordinated, in particular coordinated with the events caused by the user, in such a way that a condition of the loaded weighing device at the time of reading out the starting weighing value and at the time of reading out the ending weighing value can only differ in the quantity of the product taken away by the user - at least as long as the user exhibits a behavior as expected in a retail environment, e.g., no dismounting of installations, no deposition of items where they do not belong etc.

As indicated above and as disclosed in more detail below, the method comprises, in embodiments, a step of displaying a value on a/the indication of the weighing device, said value representing the weight of the quantity taken by the user from the quantity of the product that is laid out openly. In such embodiments, said related steps are preferably coordinated, in particular coordinated with the events caused by the user, in such a way that the displayed value can only correspond to the quantity taken by the user from the quantity of the product that is laid out openly - at least as long as the user exhibits a behavior as expected in a retail environment. In particular, the related steps may be coordinated, in particular coordinated with the events caused by the user, in such a way that the displayed value corresponds always during the weighing even to the quantity taken by the user from the quantity of the product that is laid out openly - at least as long as the user exhibits a behavior as expected in a retail environment.

For example, if the user has to use a scooping tool that is provided in a manner that it loads the weighing device when not in use, reading out of the starting weighing value will not take place before the user took the scooping tool, and reading out of the ending weighing value will not take place before the user laid down the scooping tool again. The step of identifying a start of a weighing event and the step of identifying an end of the weighing event may be configured accordingly. Further, the step or an additional step of bringing the indication to zero, if present, may be coordinated that it does not take place before the user took the scooping tool, and the step or an additional step of bringing the indication to zero, if present, may be coordinated that it does not take place before the user laid down the scooping tool again.

In an embodiment, a weighing value, and, as the case may be, a selling price and/or a base price, is provided to the user in real-time, wherein the weighing value represents the weight in which the quantity of the product at the time the starting weighing value of the weighing device is read out differs from an actual quantity of the product. In particular, the weighing value provided to the user in real-time may represent the weight in which the quantity of the product has decreased with respect to the quantity of the product at the time the starting weighing value of the weighing device was read out.

The actual quantity is a sub-quantity of the quantity of the product at the time the starting weighing value is read out. In particular, the actual quantity is at the same place and loads the same weighing device as the quantity of the product at the time the starting weighing value is read out.

The weighing value, and, as the case may be, a selling price and/or a base price, may be provided to the user by an indication of or connected to the weighing device, in particular the indication that is brought to zero, in particular brought to zero when a start of a weighing event is identified. Thereby, the real-time weighing value is the negative value of the weighing value displayed on the indication.

In an embodiment, the weighing value displayed on the indication or a signal on which the weighing value displayed on the indication bases is processed such that the weighing value displayed on the indication corresponds to the real-time weighing value.

In particular, the real-time weighing value may be provided to the user from the time the starting weighing value is read out to the time the ending weighing value is read out, at least.

Optionally, a visual and/or acoustic impression may indicate to the user the imminent identification of the end of the weighing event and/or the imminent reading out of the ending weighing value. For example, the real-time weighing value may start to blink a few seconds, for example 1, 2, 3, 4, or 5 seconds, before the end of the weighing event is identified and/or before the ending weighing value is read out.

In an embodiment, the weighing device is a multi-interval weighing device.

In particular, the weighing device may comprise a weighing range which is divided into partial weighing ranges each with different scale intervals, wherein the partial weighing range is automatically determined according to the load applied.

Usage of a multi-interval weighing device is in particular favorable for embodiments comprising the step of bringing an indication of the loaded weighing device to zero according to any embodiment disclosed. In particular, it is possible to profit from an increased accuracy after bringing the indication to zero even if the weighing device is loaded, for example loaded with a load that is close to its maximum load.

In more detail, the weighing device used in the weighing method is usually loaded when the starting and ending weighing values are read out, in particular loaded by the (remaining, in the case of the ending weighing value) quantity of the product that is laid out. Therefore, the weighing device may work in a range with low accuracy if no measures are taken, in particular if a multi-range weighing device is used as it is the case in state-of-the-art weighing processes for selling a product by piece. By using a multi-interval weighing device and carrying out a step of bringing a/the indication of the multi-interval weighing device to zero before reading out the starting weighing value, it is possible to operate the weighing device with its highest accuracy even though the weighing device is loaded by the (remaining, in the case of the ending weighing value) quantity of the product that is laid out.

Independent of the kind of weighing device used, it is no prerequisite that the weighing device is loaded by a quantity of one product, only. Rather, a plurality of quantities of different products may be laid out openly and load the weighing device. In other words, at least a quantity of a first product and a quantity of a second product may be laid out openly and load the (same) weighing device.

A real-time weighing value may be, and usually is, provided to the user also in embodiments in which the weighing device is loaded by a plurality of quantities of different products.

In an embodiment, the weighing device is loaded by a plurality of quantities of different products, wherein the different products have the same price per unit weight, this means the same base price.

However in embodiments, the weighing device may be loaded by the quantity of one product only for some kinds of products and/or for some shopping concepts. For example, this may be the case in some fruit- and vegetable sections of shops, in some groceries etc. In such embodiments, there may be a plurality of weighing devices, wherein each weighing device of the plurality of weighing devices is loaded by one product (and the mentioned further items), only.

As mentioned above, the step of identifying an end of the weighing event may comprise a step of detecting a user leaving an area adjacent to the laid out quantity of the product and/or the step of identifying a start of a weighing event may comprise a step of detecting a user entering an area adjacent to the laid out quantity of the product, in an embodiment. The area the user leaves may be, and usually is, the same area that the user entered.

Therefore, a camera or a plurality of cameras (camera in the following) may be configured to detect a user leaving the area adjacent to the laid out quantity of the product and/or to detect a user entering the area adjacent to the laid out quantity of the product, for example.

In particular, the camera may be part of a camera system, wherein the camera system comprises processing means, such as a computer program executed by a computer, that are configured to derive the information that a user is leaving and/or entering the area adjacent to the laid out quantity of the product from images taken by the camera.

The processing means may be remote processing means, such as a computer or server of the shop in which the camera system is installed.

In an embodiment, the camera system is configured for providing real-time information concerning a user's leaving and/or entering of the area adjacent to the laid out quantity of the product.

In particular, the camera system may be a camera system that is primarily or even exclusively used for detecting a user leaving and/or entering the area adjacent to the laid out quantity of the product. In particular, the processing means are primarily or even exclusively configured for detecting a user leaving and/or entering the area adjacent to the laid out quantity of the product. In particular, the processing means are not used for close and individual monitoring and mapping of the or each user and its behavior at any time during the user's stay in the store and/or for close and permanent monitoring of the quantity of the product or of a plurality of quantities of displayed products. Thereby, the camera system is able to provide real-time information concerning a user's leaving and/or entering of the area adjacent to the laid out quantity of the product, and thereby, the steps of the method may be coordinated with the user behavior, in particular with events caused by the user, in real-time. In particular, the real-time weighing value can be provided to the user on a/the indication of the weighing device.

In addition, the camera may be primarily or even exclusively used for detecting a user leaving and/or entering the area adjacent to the laid out quantity of the product.

However, there may be a system installed in the store that is configured for close and individual monitoring and mapping of the or each user and its behavior at any time during the user's stay in the store and/or for close and permanent monitoring of the quantity of the product or of a plurality of quantities of displayed products. This system is called "full monitoring system" in the following.

In particular, the camera may be a camera of the full monitoring system, in embodiments. However, the processing means used to derive the information that a user is leaving and/or entering the area adjacent to the laid out quantity of the product from images taken by the camera are usually not the processing means of the full monitoring system. In particular, the processing means of the camera system are separated from the processing means of the full monitoring system in a manner that the computationally intensive processing of images and data gathered by the full monitoring system does not delay the detection of a user leaving and/or entering the area adjacent to the laid out quantity of the product. Thereby, it can be made sure that the computationally intensive processing that is carried out in the full monitoring system does not affect adversely the camera system's ability to provide real-time information.

It goes without saying that other approaches for identifying the start and/or end of a weighing event that do not use a camera or camera system for detecting a user leaving the area adjacent to the laid out quantity of the product and/or for detecting a user entering the area adjacent to the laid out quantity of the product, in particular the other approaches disclosed above, are also able to provide real-time information concerning the start and/or end of a weighing event, whereby the steps of the method may be coordinated with the user behavior, in particular with events caused by the user, in real-time, and whereby the real-time weighing value can be provided to the user on a/the indication of the weighing device. This is in particular the case because these other approaches are primarily or even exclusively configured for detecting the start and/or end of a weighing event.

Independent of the embodiment of the step of identifying a start of a weighing event and of the embodiment of the step of identifying an end of the weighing event, the weighing method, the method for determining a price or the selling method disclosed further below, may receive information from and/or provide information to the full monitoring system. In particular, the devices and systems used in the weighing method, the method for determining a price or the selling method, may be an integral part of the full monitoring system, and the weighing method, the method for determining a price or the selling method, may be embedded in the purchasing procedure provided by the full monitoring system.

In particular, the full monitoring system may support the system used for carrying out the weighing method according to any embodiment disclosed, the method for determining a price according to any embodiment disclosed or the selling method according to any embodiment disclosed, in unclear situation, in particular in situation that are unclear due to unexpected user behavior or due to interfering presence and/or actions of different users. Examples of an unexpected user behaviour are: A user having shown a behavior that indicated the end of a weighing process reconsiders his/her decision and takes more from the quantity of the product that is laid out openly or puts something back to this quantity; or a user taking from a quantity of a first product and from a quantity of a second product without showing a behavior that indicates that the weighing event for the quantity of the first product has ended and the weighing event for the quantity of the second product has started, for example by the user leaning from a place adjacent to a first box in which the quantity of the first product is laid out to a second box in which the quantity of the second product is laid out, for example without moving away from the first box, or by the user using a scooping tool for a product for which it is not intended. An example of interfering presence and/or actions of different users is a situation in which two users are that close together and/or show such similar behavior that an attribution of a weighing event to one of these users is only possible with a unacceptable degree of uncertainty.

For example, the full monitoring system may provide information that enables the system used for carrying out the weighing method to identify users, in particular the user to whom a specific weighing event or even a specific change of a weighing value determined by the weighing device is to be attributed. The circumstance that this attribution is maybe not real-time is of minor importance because the user is not aware of such attributions until she/he checks actively her/his virtual basket. More important is that the coordination of the steps of the weighing method with the user behavior, in particular with events caused by the user, and providing the weighing value are real-time. This, however, is enabled by the proposed weighing method and the related system.

According to a second aspect of the invention, a method, in particular a computer-implemented method, for selling a product that is sold by weight and a corresponding method for determining a price of a product that is sold by weight are provided. These methods comprise a method for determining a weight of a product that is sold by weight according to any embodiment disclosed, and a step of determining a price on the basis of the difference weighing value, this means on the basis of the difference weighing value that is determined in the above-disclosed step of determining a difference weighing value.

In particular, the price that is determined is the price to be charged to the user. In other words, the price that is determined is usually a selling price, in particular a selling price for the quantity of the product taken by the user. As usual for products that are sold by weight, the selling price is determined (calculated) directly from the determined weight of the quantity of the product taken by the user, this weight being represented by the difference weighing value in methods for determining a weight, methods for determining a price of a product and/or methods for selling a product according to the invention. In particular, the selling price is determined by multiplying the difference weighing value with the base price (i.e., price per unit weight) of the product. Considering the manner the difference weighing value is determined in methods according to the invention, the selling price and/or the difference weighing value may be assigned, in particular assigned for charging, to a user only after the end of the weighing event was identified in the step of identifying an end of the weighing event. In particular, the difference weighing value may be provided to a price-computing instrument, in particular an approved price-computing instrument, and/or the selling price may be provided to a device via which the user is charged only after the end of the weighing event was identified in the step of identifying an end of the weighing event. The step of identifying an end of the weighing event may be, as pointed out above, a separate step, in particular a step that is separate from a step of identifying a start of a weighing event and that triggers the step of reading out an ending weighing value of the weighing device and, hence, the step of determining the difference weighing value on the basis of which the selling price to be charged to the user is determined.

In an embodiment, the step of determining a price on the basis of the difference weighing value is carried out by an approved device, this means by a device that is approved by a competent authority, a conformity assessment body, or the like.

In particular, the device may be approved for being used in direct sales to the public.

In particular, the device may be an approved price-computing instrument.

In particular, the device may be legal-for-trade.

It is noted that the regulatory requirements for a device being approved are country specific. For example, the regulatory requirements in the United States may be considered less restrictive than the national regulatory requirements in many European countries, and the above mentioned directive 2014/31/EU may be considered less restrictive than the national regulatory requirement in some European countries. Further, the regulatory requirements may change over time. In other words, the requirements for a device being approved may differ from country to country and may change over time. However, this does not prevent to determine whether a device is an approved device in the above sense or not.

As mentioned above, the weighing device may be, and usually is, an approved weighing device. In particular, the weighing device may be approved for the determination of mass for commercial transaction, in particular for being used in direct sales to the public.

Again, it is noted that the regulatory requirements for a weighing device being approved are country specific and may change over time. This, however, does not prevent to determine whether a weighing device is an approved weighing device in the above sense or not.

In an embodiment, the device that carries out the step of determining a price on the basis of the difference weighing value is an approved price-computing instrument, and the weighing device is an approved weighing device, wherein these devices are approved for use in combination.

Alternatively or in addition, the device that carries out the step of determining a price on the basis of the difference weighing value is an approved price-computing instrument and the weighing device is an approved weighing device, wherein the approved price-computing instrument, or the approved combination as the case may be, may be approved in a manner that a device to which the price-computing instrument provides a price and an optional device that is subsequent to the/a device to which a price is provided does not need to be approved or approved further with respect to selling a product by weight. Therefore, the price-computing instrument may provide the price in a specific format and/or measures to this effect may be taken, for example by making sure that the provided price is the only price-relevant information that is attributed to the user and/or used for charging the user. The aspect of providing the price in a specific format and the aspect of taking said measures are described in more detail further below.

In an embodiment, the step of determining a price on the basis of the difference weighing value is carried out by the weighing device that is loaded by the quantity of the product that is laid out openly.

In particular, the weighing device may be an approved price-computing instrument and an approved weighing device.

In particular, the weighing device may be configured and approved in a manner that a device to which the weighing device provides a price and an optional device that is subsequent to the/a device to which a price is provided does not need to be approved or approved further. Again, the weighing device may provide the price in a specific format and/or measures to this effect may be taken, therefore.

Independent of the concrete realization of making sure that a device to which the price is provided and an optional subsequent device does not need to be approved or approved further, a common idea behind these realizations is to carry out conclusively any processing that is relevant for approval of a method or system by the time the price is provided to this or these devices.

In an embodiment, the step of determining a price on the basis of the difference weighing value is carried out by a first device, and the method for selling and/or the method for determining a price comprise a step of providing the price to a second device that is different from the first device.

As mentioned above, the first device may be, and usually is, a device that is an approved price-computing instrument. The first device may be the weighing device, in particular the approved weighing device.

The second device may be, and usually is, the above mentioned device to which the price-computing instruments provides a price, wherein the device does not need to be approved or approved further, in embodiments. The second device may be, and usually is, the device via which the user is charged.

The price that is finally charged to the user bases on the price provided in the step of providing the price. In particular, the price charged to the user may be the price provided in the step of providing the price. However, the charged price may be lower than the provided price, for example due to special offers, price promotion, discount coupons etc. Alternatively, special offers, price promotion, discount coupons etc. may be considered by the first device before providing the price. In this case, the price charged to the user is usually the price provided in the step of providing a price.

In an embodiment, the second device is a Point-of-Sales (POS) system or a Check-out system. The POS / Check-out system may be of any kind used in shops, in particular in Pick & Go shops. In particular, the POS / Check-out system may comprise an app that runs on a mobile device of the user.

As mentioned, the device that provides the price (first device, approved device, approved price-computing instrument) may provide the price in a specific format.

In an embodiment, the price is provided in at least one of the following formats:
- A format that allows verification of a price that bases on the price determined in the step of determining a price on the basis of the difference weighing value and that is used in a step of the method for selling a product that is sold by weight, this step being subsequent to the step of providing the price determined in the step of determining a price on the basis of the difference weighing value.
   For example, the format may comprise a signature, a checksum etc.
- An unchangeable format.
For example, the price may be provided read-only, with an activated write protection etc.

In an embodiment, the first device provides information that is in additional to the price provided in the step of providing the price.

The difference weighing value and product information are examples of additional information that may be provided.

The additional information may be provided to the second device and/or to a further device, for example to a computer that is used for inventory purpose.

In an embodiment, the additional information comprises price-relevant information, in particular the difference weighing value.

In an embodiment, it is ruled out that any price-relevant information provided by the first device that is in addition to the provided price is attributed to the user and/or used for charging (billing, ...) the user. This may be established by an accordingly configured computer program, in particular a computer program that is approved by a competent authority. Such ruling out may be considered as another feature that may contribute to the above-mentioned aim to make sure that a device to which the price is provided and an optional device that is subsequent to the/a device to which a price is provided does not need to be approved or approved further.

For example, only the price, in particular the price in one of the above mentioned specific formats, and optionally non price-relevant information, such as product information, is/are provided to the system via which a user is charged. Any price-relevant information provided by the first device that is in addition to the provided price may be provided only to a device or devices that is/are not involved in charging the user. The system via which a user is charged may be a POS system or Check-out system. An inventory system and a device having informative character only are examples of devices that are not involved in charging a user.

Alternatively to the first device providing additional information, this means information that is additional to providing the price, this additional information comprising price-relevant information, the price may be the only price-relevant information provided by the first device, in an embodiment. In particular, the price may be the only price-relevant information provided by the first device to the second device. Again, this may be considered as another feature that may contribute to the above-mentioned aim to make sure that a device to which the price is provided and an optional device that is subsequent to the/a device to which a price is provided does not need to be approved or approved further.

Independent of any information that may be in addition to the price and independent of the format with which the price is provided in the step of providing the price, the price may be provided as a high-resolution price.

In particular, the price may be provided in a manner that the difference weighing value can be calculated again from the provided price. Thereby, a potentially existing requirement for displaying and/or printing the difference weighing value at the end of the sales process may be fulfilled, in particular in embodiments in which the price is the only price-relevant information provided by the first device to the system via which a user is charged. In other words, the price is provided in a manner that the system via which a user is charged is enabled to calculate the difference weighing value, this means the weight of the quantity taken by the user, with sufficient accuracy.

For example, the price may be provided over accurate, in particular exact to more than two digits.

For example, the price may be provided exact to 0.1, 0.01, or 0.001 cent, centime etc.

The invention concerns further a computer program comprising instructions which, when the computer program is executed by a computer, cause the computer to carry out at least one of the method for determining a weight of a product that is sold by weight, the method for selling a product that is sold by weight, and/or the method for determining a price of a product that is sold by weight according to any embodiment disclosed.

The invention concerns further a reproducible computer-readable signal encoding the computer program that, when loaded and executed on a computer, causes the computer to carry out at least one of the method for determining a weight of a product that is sold by weight, the method for selling a product that is sold by weight, and/or the method for determining a price of a product that is sold by weight according to any embodiment disclosed.

The invention concerns further a computer-readable medium having stored thereon instructions which, when executed by a computer cause the computer to carry out at least one of the method for determining a weight of a product that is sold by weight, the method for selling a product that is sold by weight, and/or the method for determining a price of a product that is sold by weight according to any embodiment disclosed.

The invention concerns further a data carrier signal carrying instructions which, when executed by a computer cause the computer to carry out at least one of the method for determining a weight of a product that is sold by weight, the method for selling a product that is sold by weight, and/or the method for determining a price of a product that is sold by weight according to any embodiment disclosed.

The invention concerns further a method for manufacturing a non-transitory computer readable medium, comprising the step of storing, on the computer readable medium, computer-executable instruction which, when executed by a processor of a computing system cause the computing system to perform at least one of the method for determining a weight of a product that is sold by weight, the method for selling a product that is sold by weight, and/or the method for determining a price of a product that is sold by weight according to any embodiment disclosed.

In particular, the computer or processor mentioned with respect to the computer program, the reproducible computer-readable signal, the computer-readable medium, the data carrier signal, and the non-transitory computer readable medium causes the devices involved, such as the weighing device, the first device (if different from the weighing device), the second device, devices used for identifying a start and/or an end of a weighing event, in particular the camera or camera system, the indication, the full monitoring system or elements thereof, to carry out the steps of said methods.

The invention concerns further a system comprising a weighing device, wherein the system is configured to carry out at least one of the method for determining a weight of a product that is sold by weight, the method for selling a product that is sold by weight, and/or the method for determining a price of a product that is sold by weight according to any embodiment disclosed.

The weighing device may be according to any embodiment disclosed with respect to the methods.

The elements of a system configured for carrying out an embodiment or embodiments of the method for determining a weight of a product that is sold by weight, of the method for selling a product that is sold by weight, or of the method for determining a price of a product that is sold by weight are evident from the disclosure with respect to this embodiment or these embodiments.

In particular, the system may comprise in addition to the weighing device and in dependence on the embodiment or embodiments of the method for which the system is configured to carry it/them out one or more of the following elements:
The first device (if different from the weighing device), the second device, one or more devices used for identifying a start and/or an end of a weighing event, in particular the camera or camera system, the indication, the full monitoring system or elements thereof.

In an embodiment, the system comprises the weighing device, a computer and a memory on which the above-mentioned computer program is stored, wherein the system is configured for carrying out at least one of the method for determining a weight of a product that is sold by weight, the method for selling a product that is sold by weight, and/or the method for determining a price of a product that is sold by weight according to any embodiment disclosed.

Again, this system may comprise further elements in dependence on the embodiment or embodiments of the method for which the system is configured to carry it/them out.

The computer and the memory may be a computer and a memory of the weighing device, of another element of the system, or of a remote device.

It is understood that the features and embodiments disclosed above may be combined with each other. It will further be appreciated that further embodiments are conceivable within the scope of the present disclosure and the claimed subject matter which are obvious and apparent to the skilled person by virtue of the present disclosure.

### Brief description of drawings

The subject matter of the present disclosure is now to be explained in more detail by means of selected exemplary embodiments shown in the accompanying drawings. The figures show:
- Fig. 1: is schematic representation of a non-Pick&Go state-of-the-art weighing and pricing process of products that are sold by weight;
- Fig. 2: is a schematic representation of an exemplary embodiment of a method according to the invention, wherein the method is a method for selling a product that is sold by weight;
- Fig. 3: is a flow chart of a method for determining a weight of a product that is sold by weight;
- Fig. 4: is a flow chart of a method for selling a product that is sold by weight; and
- Fig. 5: is a schematic representation of an exemplary embodiment of a related system.

It is understood that the drawings are highly schematic, and details not required for instruction purposes may have been omitted for the ease of understanding and depiction. It is further understood that the drawings show only selected, illustrative embodiments, and embodiments not shown may still be well within the scope of the herein disclosed and/or claimed subject matter.

### Description of embodiments

**Figure 1** is schematic representation of a non-Pick&Go state-of-the-art weighing and pricing process of products that are sold by weight. As mentioned in the section "Background Art", a non-Pick&Go state-of-the-art weighing and pricing process of products that are sold by weight can be separated roughly in five steps:
In step 1, a user 1 (customer, buyer, ...) decides on the quantity (amount, number, ...) of the product 3 she/he wants to buy and takes this quantity away from a laid out quantity of the product 3. In the embodiment shown in figure 1, the laid out quantity of the product 3 is a plurality of apples that are laid out in a container 2 (box) that is arranged on a frame 4.
In step 2, the user places the quantity of the product 3 she/he took away on a weighing device 10. Therefore, the user has to go to the place the weighing device 10 is, this place being different from the place the container 2 is.
In step 3, the weighing of the quantity that was placed on the weighing device 10 is performed. The weighing result, this means the weight of the quantity that was placed on the weighing device 10, this weight being determined by the weighing, is displayed to the user 1 on an indication 11 (display, screen ...) of the weighing device 10.
In step 4, the selling price of the quantity of the product 3 that was placed on the weighing device 10 and that was weighed is determined. Therefore, a user action is required. In particular, the user 1 needs to specify the kind of the product 3 that was placed on the weighing device 10 and that was weighed. In the embodiment shown in figure 1, the user 1 needs to specify the variety (type) of apple.
In step 5, a printout 13 is generated. Therefore, the weighing device 10 comprises or is connected to a printer 12. The printout 13 displays product information (apple, in the embodiment shown in figure 1), the weight determined by the weighing device (0.20 kg, in the embodiment shown in figure 1), the base price of the product 3 (1.00 €/kg, in the embodiment shown in figure 1), and the selling price (0.20 €, in the embodiment shown in figure 1). The printout 13 may comprise further information, such as a bar- or QR-code that may be scanned at a POS- or Check-out system.

It is evident from figure 1 that the shown weighing process, pricing process and related selling process are far from being frictionless or Pick&Go. In particular, the user 1 needs to bring the quantity of the product 3 she/he wants to buy to a weighing device 10, needs to interact with the weighing device 10, needs to take a printout 13 with him/her, and needs to use the printout 13 to pay for the quantity of the product 3 at a POS- or Check-out system, at least.

**Figure 2** is a schematic representation of an exemplary embodiment of a method according to the invention, wherein the method is a method 200 for selling a product 3 that is sold by weight, and wherein the method is configured for use in frictionless commerce, in particular in Pick&Go shopping.

In the exemplary embodiment shown in figure 2, a quantity of the product 3 that is sold by weight is arranged in a container 2 (box) that loads a weighing device 10. The weighing device 10 and the container 2 may be arranged, for example, on a frame 4 (as shown in figure 2), on the floor, or in a shelf, wherein the shelf may form the container 2.

The weighing process that is part of the method 200 for selling a product 3 that is sold by weight shown in figure 2, and hence a related pricing or selling process, comprises a step S1 of identifying a start of a weighing event concerning the quantity of the product 3 that loads the weighing device 10, and a step S3 of identifying an end of the weighing event concerning the quantity of the product 3 that loads the weighing device 10. These steps are carried out in an automated manner, this means without involving a user action that is not part of the actions carried out by a user 1 during shopping anyway. Therefore, means 24 for identifying the start and end of the weighing event are installed.

In the embodiment shown in figure 2, these means comprise a camera system comprising at least one camera 5 and processing means. The at least one camera 5 is arranged to take images of an area comprising an area 6 that is adjacent to the quantity of the product 3 that is laid out in the container 2. The processing means are configured to determine from the images taken by the at least one camera 5 the event of a user 1 entering the area 6 that is adjacent to the quantity of the product 3 that is laid out in the container 2 and the event of a user 1 leaving the area 6 that is adjacent to the quantity of the product 3 that is laid out in the container 2.

In the embodiment shown in figure 2, detection of the event of a user 1 entering the area 6 that is adjacent to the quantity of the product 3 that is laid out in the container 2 is considered as identifying a start of a weighing event concerning the quantity of the product 3 that is laid out in the container 2, and detection of the event of the user 1 leaving the area 6 that is adjacent to the quantity of the product 3 that is laid out in the container 2 is considered as identifying the end of the weighing event concerning the quantity of the product 3 that is laid out in the container 2.

As soon as the event of a user 1 entering the area 6 that is adjacent to the quantity of the product 3 that is laid out in the container 2 is detected, an indication 11 (display, screen ...) of or connected to the weighing device 10 is brought S6 to zero. This means, the indication 11 shows zero (0.0 kg, in the embodiment shown in figure 2), at least now. Further, a starting weighing value of the weighing device 10 is read out S2 and stored. The starting weighing value may be zero, this means the weighing value displayed on the indication 11, or a weighing value that represent the effective (real) load on the weighing device 10 at the time of, or immediately subsequent to, detecting the event of a user 1 entering the area 6 that is adjacent to the quantity of the product 3 that is laid out in the container 2.

The user 1 does not perceived any of these activities running in the background (except the indication 11 going to zero, maybe) and continues with his/her preferred shopping behavior. In particular, as shown schematically in the second image of figure 2, the user 1 takes the quantity from the laid out quantity of the product 3 she/he wants to buy, wherein the indication 11 shows always the weight of the quantity the user took away so far (0.2 kg, in the embodiment shown in figure 2). In dependence of the concrete situation, the indication 11 may display further information, for example the selling price of the quantity taken so far and/or the base price of the product 3. In particular, this may be the case in situations in which the weighing device 10 is loaded by one product only, by products of the same base price only, or if means for automated detection of the product taken by the user 1 are installed.

As soon as the user 1 made his final decision and moves away, with the quantity of the product 3 she/he decided to buy, from the container 2 in which the quantity of the product 3 is laid out, the camera system detects the event of the user 1 leaving the area 6 that is adjacent to the quantity of the product 3 that is laid out in the container 2 (third image of figure 2). As mentioned above, detection of this event is considered as identification S3 of the end of the weighing event, in the embodiment shown in figure 2.

In reaction to this event, the indication 11 is brought S6 to zero, again. In the embodiment shown in figure 2, the indication 11 is brought to zero immediately after detecting the event of the user 1 leaving the area 6 that is adjacent to the quantity of the product 3 that is laid out in the container 2. Brining the indication 11 to zero indicates to a next user that everything is ready for a next weighing event concerning the quantity of the product 3 that is laid out in the container 2.

Further, an ending weighing value of the weighing device 10 is read out S4 in reaction to the event of the user 1 leaving the area 6 that is adjacent to the quantity of the product 3 that is laid out in the container 2. Again, the read out ending weighing value may be the weighing value displayed on the indication 11, or a weighing value that represent the effective (real) load on the weighing device 10 at the time of, or immediately subsequent to, detecting the event of a user 1 leaving the area 6 that is adjacent to the quantity of the product 3 that is laid out in the container 2. Further, a difference weighing value is determined S5 by determining the difference between the stored starting weighing value and the corresponding ending weighing value. This difference weighing value corresponds to the weight of the quantity of the product 3 that the user took away.

The difference weighing value is, or dependent of the concrete situation was, used for determining S11 the selling price of the quantity of the product 3 the user took away. The selling price is usually determined by an approved price-computing instrument 21. In the embodiment shown in figure 2, the weighing device 10 is approved for price-computing in direct sales to the public. Therefore, the selling price determined by the weighing device 10, or a separate approved price-computing instrument 21, as the case may be, can be used for charging the user for the quantity of the product 3 she/he took away.

Therefore, the determined selling price is provided S12 by the approved price-computing instrument 21 to a system 22 via which the user 1 is charged for the quantity of the product 3 she/he took away. In the embodiment shown in figure 2 (fourth and last image of figure 2), this system 22 comprises a mobile device 7 of the user 1. On the mobile device 7 runs an app that displays all information concerning the selling process that have to be displayed to the user 1 according to regulatory requirements. In the embodiment shown in figure 2, product information (apple, in the embodiment shown in figure 2), the weight determined by the weighing device (0.20 kg, in the embodiment shown in figure 2), the base price of the product 3 (1.00 €/kg, in the embodiment shown in figure 2), and the selling price (0.20 €, in the embodiment shown in figure 2) are displayed. Further, the app may be, and often is, configured for check out, this means for charging the user 1. This check out may be, and often is, frictionless. In particular, the check out, and hence at least the part of the app that concerns check out, may be according to existing solutions for frictionless or friction-reduced check out in Pick&Go shops.

As mentioned in detail further above, the price-computing instrument 21, that is the weighing device 10 in the embodiment shown in figure 2, may provide S12 the selling price, and optionally further (additional) information, in a manner, in particular in a format, that a device to which the price-computing instrument 21 provides the selling price and an optional device that is subsequent to the/a device to which the selling price is provided does not need to be approved or approved further, and/or measures to this effect may be taken, for example by making sure that the provided selling price is the only price-relevant information that is attributed to the user 1 and/or used for charging (billing, ...) the user. In particular, measures may be taken that the provided selling price is the only price-relevant information that is used for charging the user 1 and it may be made sure that the selling price is provided in at least one of an unchangeable format and a format that allows verification of the provided selling price.

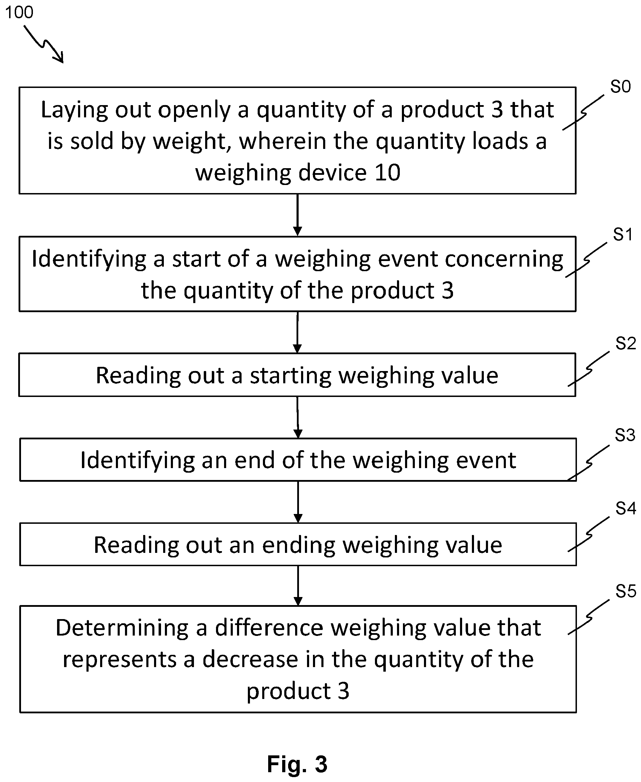

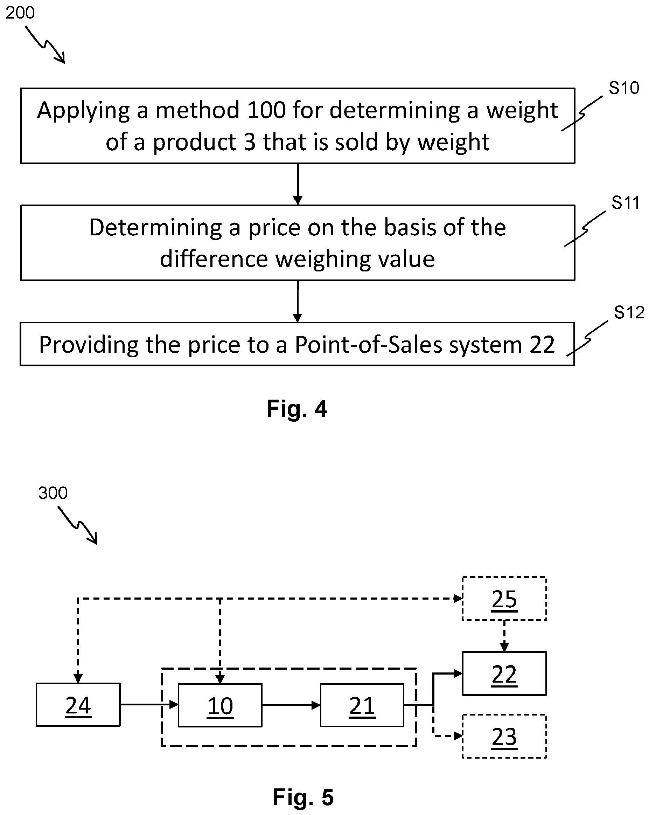

If the selling price, and optionally further (additional) information, is provided in a manner that a device to which the approved price-computing instrument 21 provides the selling price and an optional device that is subsequent to the/a device to which the selling price is provided does not need to be approved, these devices do not need to be approved further. In particular, these devices do not need to be approved (further, as the case may be) for selling a product 3 that is sold by weight. Therefore, the method 100 for determining a weight of a product 3 that is sold by weight and the method 200 for selling a product 3 that is sold by weight as shown exemplarily in figure 2 (and figures 3 and 4), may be used in combination with POS- and Check-out systems as actually used in shops, for example in Pick&Go shops, without need for approving them further. Alternatively or in addition, these methods may be used for POS- and Check-out systems for which it is difficult to get approval, in particular approval for selling a product by weight, for example because the system makes use of a mobile device 7 of the user 1.

**Figure 3** shows a flow chart of the method 100 for determining a weight of a product 3 that is sold by weight as disclosed exemplarily with respect to figure 2 in a more general manner.

The method 100 comprises the following steps:
A step S0 of laying out openly a quantity of a product 3 that is sold by weight, wherein the quantity loads a weighing device 10.

With respect to this step S0, it is noted that "laying out openly" restricts the manner the quantity of the product 3 is offered to a user 1 to situations as usually present in fruit- and vegetable sections of shops, although the field of application of the method 100 is not restricted to fruit- and vegetable sections of shops and/or fruits and vegetables. However, situations as present when offering a product in a vending machine or a dispenser are not covered.

A or the step S1 of identifying a start of a weighing event concerning the quantity of the product 3.

The step S1 of identifying a start of a weighing event is carried out in an automated manner without conscious or intentional contribution of the user 1. Various approaches may be used to carry out the step S1 of identifying a start of a weighing event, for example the camera system disclosed with respect to figure 2.

A or the step S2 of reading out a starting weighing value of the weighing device 10. In other words, a weighing value is read out that is considered as an absolute or relative weighing value of the loaded weighing device 10 at the time the user 1 starts taking from the quantity of the product 3 that is laid out and loads the weighing device 10.

A or the step S3 of identifying an end of the weighing event concerning the quantity of the product 3.

The step S3 of identifying an end of the weighing event is carried out in an automated manner without conscious or intentional contribution of the user 1. Various approaches may be used to carry out the step S3 of identifying an end of the weighing event. The realized approach may base on the same equipment as used in the step S1 of identifying a start of a weighing event. For example, the camera system disclosed with respect to figure 2 may be used.

A or the step S4 of reading out an ending weighing value of the weighing device 10. In other words, a weighing value is read out that is considered as an absolute or relative weighing value of the loaded weighing device 10 at the time the user 1 has stopped taking from the quantity of the product 3 that is laid out and loads the weighing device 10, in particular has definitely stopped, this means has taken the quantity of the product 3 she/he wants to buy.

It goes without saying, that the kind of weighing value that is read out in the step S4 of reading out an ending weighing value of the weighing device 10 is usually of the same kind as the weighing value that is read out in the step S2 of reading out a starting weighing value.

A or the step S5 of determining a difference weighing value by determining a difference between the starting weighing value and the ending weighing value, wherein the difference weighing value represents a decrease in the quantity of the product, namely the weight of the quantity of the product 3 taken away by the user 1.

**Figure 4** shows a flow chart of the method 200 for selling of a product that is sold by weight as disclosed exemplarily with respect to figure 2 in a more general manner.

The method 200 comprises the following steps:
A step S10 of applying a method 100 for determining a weight of a product 3 that is sold by weight according to any embodiment disclosed, for example as disclosed with respect to figure 2 or 3.

A or the step S11 of determining a price on the basis of the difference weighing value.

In particular, the price may be determined by an approved price-computing instrument 21 that may be the weighing device 10.

A or the step S12 of providing the price to a device or system 22 that is different from the device 21 that determines the price.

In particular, the price, and optionally further (additional) information, such as the difference weighing value, a base price and/or product information, is provided to a POS- or Check-out system.

In particular, the price, and optionally the further (additional) information, is provided in a manner that a device to which the approved device 21 that determines the price provides the price and an optional device that is subsequent to the/a device to which the price is provided does/do not need to be approved. Therefore, measures may be taken as disclosed with respect to figure 2, for example (specific format and/or making sure that the provided selling price is the only price-relevant information that is attributed to the user 1 and/or used for charging (billing, ...) the user).

**Figure 5** shows a schematic representation of an exemplary embodiment of a system 300 equipped for carrying out a method 100 for determining a weight of a product 3 that is sold by weight and a method 200 for selling a product that is sold by weight, for example as disclosed with respect to figures 1-4. In figure 5, arrows indicate potential flow of information, and a dashed line indicates optional features or optional communication.

The system 300 comprises a weighing device 10, for example as disclosed with respect to figures 1-4.

The system 300 comprises further at least one device or a system 24 that is configured to identify the start and/or end of a weighing event. This device or system 24 may be integrated in the weighing device 10, for example in embodiments in which the start and/or end of a weighing event is detected by analyzing manipulations on the weighing device 10, in particular a temporal course of user interactions with the weighing device 10 and/or the onset or absence of a user interaction. However, in many embodiments, the device or system 24 is separate from the weighing device 10, for example if it is configured to detect the user 1 getting, getting soon, or not getting in contact with the quantity of the product 3 that is laid out openly.

The device or system 24 that is configured to identify the start and/or end of a weighing event may interact with an optional full monitoring system 25 that is installed in the store in which the system 300 is installed. The device or system 24 may use elements of the full monitoring system 25, such as a camera thereof. Alternatively or in addition, the device or system 24 may profit from information generated by the full monitoring system 25, for example in unclear situation.

Information concerning the start and end of a weighing event is provided to the weighing device 10. Thereby, the weighing device 10 is enabled to determine the starting weighing value, the ending weighing value, and the difference weighing value.

The system 300 comprises further a price-computing instrument 21, in particular an approved price-computing instrument. The difference weighing value is provided to the price-computing instrument 21. The weighing device 10 may be the price-computing instrument 21.

The price-computing instrument 21 determines a price of the quantity of the product 3 taken by the user 1 during the weighing event, this price being calculated from the determined difference weighing value.

The system 300 comprises further a POS- or Check-out system 22. The price-computing instrument 21 provides the price and, optionally, further (additional) information to the POS- or Check-out system 22. Again, measures may be taken as disclosed, for example, with respect to figure 2 (specific format and/or making sure that the provided selling price is the only price-relevant information that is attributed to the user 1 and/or used for charging (billing, ...)) for making sure that the POS- or Check-out system 22 and an optional device that interacts with the POS- or Check-out system for charging the user 1 does/do not need to be approved or approved (further, as the case may be) for selling a product by weight.

In the exemplary embodiment of figure 5, an optional further device 23 is shown to which the price-computing instrument 21 and/or the weighing device 10 may provide information. This further device 23 is not involved in the process of charging the user 1. For example, it may be a device used for inventory control, problem identification etc.

It goes without saying that a system 300 comprising the weighing device 10 and the device or system 24 that is configured to identify the start and/or end of a weighing event is sufficient to carry out the method 100 for determining a weight of a product 3 that is sold by weight.

### Reference signs list

- 1: User
- 2: Container
- 3: Product
- 4: Frame
- 5: Camera
- 6: Area adjacent to the laid out quantity of the product
- 7: Mobile device
- 10: Weighing device
- 11: Indication
- 12: Printer
- 13: Printout
- 21: First device
- 22: Second device
- 23: Further device
- 24: Device used for identifying a start and/or end of a weighing event
- 25: Full monitoring system
- 100: Method for determining a weight of a product that is sold by weight
- 200: Method for selling a product that is sold by weight
- 300: System

- S0: Laying out openly a quantity of a product that is sold by weight, wherein the quantity loads a weighing device
- S1: Identifying a start of a weighing event
- S2: Reading out a starting weighing value
- S3: Identifying an end of the weighing event
- S4: Reading out an ending weighing value
- S5: Determining a difference weighing value
- S6: Bringing an indication to zero
- S10: Applying a method for determining a weight of a product that is sold by weight
- S11: Determining a price
- S12: Providing the price

## Claims

1. A method (100) for determining a weight of a product (3) that is sold by weight, wherein a quantity of the product is laid out openly and loads a weighing device (10), wherein the method comprises:
• a step (S1) of identifying a start of a weighing event concerning the quantity of the product;
• a step (S2) of reading out a starting weighing value of the weighing device;
• a step (S3) of identifying an end of the weighing event concerning the quantity of the product;
• a step (S4) of reading out an ending weighing value of the weighing device;
• a step (S5) of determining a difference weighing value by determining a difference between the starting weighing value and the ending weighing value, wherein the difference weighing value represents a decrease in the quantity of the product.

2. The method of claim 1, wherein the ending weighing value is read out in the step (S4) of reading out an ending weighing value after a weighing signal measured by the weighing device (10) has not changed for a pre-set period of time.

3. The method of claim 1 or 2, comprising a step (S6) of bringing an indication (11) of the loaded weighing device (10) to zero.

4. The method of claim 3, wherein a weighing value is provided to a user in real-time,
wherein the weighing value represents the weight in which the quantity of the product (3) at the time the starting weighing value of the weighing device is read out differs from an actual quantity of the product (3).

5. The method of one of claims 1-4, wherein the step (S3) of identifying an end of the weighing event comprises a step of detecting a user (1) leaving an area (6) adjacent to the laid out quantity of the product (3) and/or the step (S1) of identifying a start of a weighing event comprises a step of detecting a user (3) entering an area (6) adjacent to the laid out quantity of the product (3).

6. A method for determining a price of a product (3) that is sold by weight, comprising a method (100) for determining a weight of a product (3) that is sold by weight according to one of claims 1-5, and comprising further a step (S11) of determining a price on the basis of the difference weighing value.

7. A method (200) for selling a product (3) that is sold by weight, comprising a method (100) for determining a weight of a product (3) that is sold by weight according to one of claims 1-5, and comprising further a step (S11) of determining a price on the basis of the difference weighing value.

8. The method of claim 6 or 7, wherein the step (S11) of determining a price on the basis of the difference weighing value is carried out by a first device (10, 21), and wherein the method comprises a step (S12) of providing the price to a second device (22) that is different from the first device.

9. The method of claim 8, wherein a price charged to a user (1) bases on the price provided in the step (S12) of providing the price.

10. The method of claim 8 or 9, wherein the second device (22) is a Point-of-Sales system or a Check-out system.

11. The method of one of claims 6-10, wherein the step (S11) of determining a price on the basis of the difference weighing value is carried out by an approved device (10, 21).

12. The method of one of claims 6-11, wherein the step (S11) of determining a price on the basis of the difference weighing value is carried out by the weighing device (10).

13. A computer program comprising instructions which, when the computer program is executed by a computer, cause the computer to carry out a method according to one of claims 1-12.

14. A system (300) comprising a weighing device (10), wherein the system is configured to carry out a method according to one of claims 1-12.

15. The system of claim 14, further comprising a computer and a memory on which a computer program according to claim 13 is stored, wherein the system is configured for carrying out a method according to one of claims 1-12 if the computer program is executed by the computer.
